Europäisches Patentamt

European Patent Office

Office européen des brevets

(19)

(11) Numéro de publication : **0 434 508 B1**

# (12) FASCICULE DE BREVET EUROPEEN

(45) Date de publication du fascicule du brevet :
**19.04.95 Bulletin 95/16**

(51) Int. Cl.[6] : **G06T 15/00**

(21) Numéro de dépôt : **90403552.4**

(22) Date de dépôt : **12.12.90**

(54) **Procédé de reconstruction multi-échelle de l'image de la structure d'un corps.**

(30) Priorité : **20.12.89 FR 8916906**

(43) Date de publication de la demande :
**26.06.91 Bulletin 91/26**

(45) Mention de la délivrance du brevet :
**19.04.95 Bulletin 95/16**

(84) Etats contractants désignés :
**DE NL**

(56) Documents cités :
**EP-A- 0 318 291**

(73) Titulaire : **GENERAL ELECTRIC CGR S.A.
100, rue Camille-Desmoulins
F-92130 Issy les Moulineaux (FR)**

(72) Inventeur : **Trousset, Yves
Cabinet Ballot-Schmit,
7, rue Le Sueur
F-75116 Paris (FR)**
Inventeur : **Rougee, Anne
Cabinet Ballot-Schmit,
7, rue Le Sueur
F-75116 Paris (FR)**
Inventeur : **Saint-Felix, Didier
Cabinet Ballot-Schmit,
7, rue Le Sueur
F-75116 Paris (FR)**

(74) Mandataire : **Schmit, Christian Norbert Marie
et al
Cabinet Ballot-Schmit
7, rue Le Sueur
F-75116 Paris (FR)**

## Description

La présente invention a pour objet un procédé de reconstruction multi-échelle de l'image de la structure d'un corps. Elle trouve plus particulièrement son application dans le domaine médical où on procède à la reconstruction des structures internes de patients sous examen. Elle peut trouver néanmoins son application dans d'autres domaines, notamment dans le contrôle non destructif industriel dans lequel des examens du même type que les examens médicaux sont pratiqués. La méthode de l'invention vise à accroître la rapidité de la reconstruction à trois dimensions quand les algorithmes de reconstruction sont des algorithmes par itération.

On connaît des protocoles d'acquisition utilisés en médecine pour connaître les structures internes d'un corps. Ces protocoles sont essentiellement les protocoles de types tomodensitométrie, RMN, ultrasons, scintigraphie. Dans ces protocoles on soumet des parties du corps d'un patient à un examen. De manière par exemple à pouvoir reconstruire l'image en trois dimensions de la structure interne du corps, un tel examen comporte des séries de mesures. Chaque série est distincte d'une autre par la modification d'un paramètre de la série de mesures ou expérimentation. Par exemple en tomodensitométrie, le paramètre concerne l'orientation du tomodensitomètre. En RMN le paramètre peut concerner la valeur d'une impulsion de gradient de sélection de coupe. Dans tous les cas on acquiert ainsi plusieurs séries de résultats de mesures. Chaque série est représentative du corps et de la configuration correspondante de la caractéristique d'expérimentation.

Par ailleurs, on connaît dans le domaine de la reconstruction d'images à partir de données tomographiques le principe d'un compromis entre le degré de résolution et le temps de reconstruction à partir d'une représentation de surface (cf EP-A-318291, méthode de division cubique).

Pour reconstruire, à partir des séries de mesure, l'image à trois dimensions de structures internes sous examen, il existe essentiellement deux types d'algorithme de reconstruction en imagerie par rayons X. Un premier type concerne un calcul de rétroprojection et filtrage ou encore de reconstruction par transformée de Fourier à plusieurs dimensions. Un deuxième type, celui qui est concerné par l'invention concerne les méthodes itératives de reconstruction dites encore algébriques. Ce deuxième type trouve une application particulière en tomodensitométrie parce que la mise en oeuvre des algorithmes du premier type conduit à des solutions instables quand il s'agit de reconstruction en volume à partir d'un faible nombre de vues. Le principe d'un tel algorithme algébrique, dont un perfectionnement a été décrit dans une demande de brevet français du demandeur déposée le 20 janvier 1989 sous le numéro 89 00676, est le suivant.

On commence d'abord par estimer, a priori, l'allure de la structure du corps sous examen. Ceci signifie que, pour tous les éléments de volume, ou voxels, de ce corps sous examen, on considère que la valeur de la propriété physique testée par l'expérimentation a une valeur connue, par exemple 0. Puis on soumet cet objet théorique (ne ressemblant bien entendu pas du tout à l'objet que l'on cherche à reconnaître) mathématiquement à une série d'expérimentations semblables à celles auxquelles a réellement été soumis le corps à examiner. La simulation ainsi exécutée conduit elle aussi à des séries de "mesures", appelées par exemple reprojections, de l'objet théorique (faux) selon de mêmes configurations de la caractéristique d'expérimentation. On compare alors série de mesures à série de reprojections et, dans les séries respectives, chaque valeur deux à deux entre elles, de manière à déduire, à partir de l'écart constaté, une modification correspondante de la valeur de la grandeur physique dans le voxel concerné. On modifie en conséquence l'estimation théorique de cet objet.

Ceci étant fait, on réitère cette opération de simulation d'expérimentation, et on réitère également l'opération de comparaison des séries de reprojection nouvellement obtenues avec les mêmes séries de mesures réellement mesurées dans le corps. On en déduit un deuxième écart avec lequel on remodifie la connaissance qu'on avait préalablement obtenu de la structure du corps. Ainsi de suite on affine l'estimation de l'image à trois dimensions de la structure du corps.

On doit indiquer que les mesures réelles sont acquises avec une résolution donnée et que la reconstruction de l'image du corps sera effectuée selon une résolution donnée également. De manière à bien différencier la résolution des mesures et la résolution de la reconstruction on parlera pour cette dernière, dans la suite de cet exposé, d'une finesse de reconstruction. On sait que la résolution des mesures, au moment des acquisitions conduit en correspondance à une finesse significative de la reconstruction du corps sous examen. Une finesse est significative si elle correspond effectivement à la connaissance la plus précise possible, compte tenu de la résolution des mesures effectuées. En effet, si on connaît l'image d'une structure selon une finesse donnée et que, par des procédés. d'agrandissement quelconques, on exprime l'image de cette structure selon une finesse plus grande, on n'augmente pas sa finesse significative. En effet on ne fait, en définitive, qu'utiliser les informations acquises. Ceci est assimilable au grain d'une photographie en positif qui ne peut jamais avoir une résolution supérieure au grain du négatif utilisé pour prendre la photographie, quelles que soient les techniques d'agrandissement mises en jeu.

Bien entendu les praticiens cherchent à connaître les images des structures étudiées avec la plus grande finesse possible : ceci conduit automatiquement à réaliser, au moment des expérimentations, des séries de mesures avec la plus grande résolution possible. L'inconvénient présenté par une grande résolution et une grande finesse reconstruite se situe dans la durée des calculs de reconstruction qu'il faut envisager. Ceci est particulièrement le cas avec les méthodes itératives où les calculs sont entrepris plusieurs fois, en général au moins de deux fois.

Dans l'invention on résout ce problème de la durée des calculs en remarquant que, pour les premières itérations, il n'est pas nécessaire d'effectuer les calculs avec une très grande résolution ni une très grande finesse. En effet, les écarts évalués au cours des premières itérations sont tellement importants qu'il n'est pas nécessaire de les évaluer très précisément. Par exemple, on comprend qu'il n'est pas nécessaire de connaître jusqu'à la troisième décimale la valeur d'une grandeur physique mesurée dans un voxel quand on sait que le résultat sur la première décimale peut déjà lui même être faux. L'invention ne porte cependant pas sur le caractère flottant de cette précision qui, si on y regarde bien ne conduirait pas à une réduction significative des temps de calcul. En effet, les opérations d'itération comportent classiquement des séries de multiplications et d'additions dont la durée élémentaire n'est pas liée au nombre de bit à traiter. Il y a en effet un traitement parallèle en permanence. Cette durée est plutôt liée au fait que ces opérations doivent se suivre : une opération suivante utilisant comme arguments les résultats d'une opération précédente.

Dans l'invention, on a remarqué qu'il n'était pas nécessaire d'exprimer, pour les premières itérations, le volume reconstruit avec la finesse finale mais que, au contraire, on pouvait utiliser une finesse moins grande que la finesse finale. En même temps on utilise une résolution des mesures moins grande que la résolution finale. On attribue le qualificatif final à la finesse la plus grande dans laquelle le praticien désire ensuite voir les images. Pour la résolution des mesures, la résolution finale est celle qui est utilisée en dernier dans les calculs (elle est également celle qui est réellement acquise au cours des expérimentations). Autrement dit, au lieu d'essayer d'exprimer des valeurs de grandeurs physiques, en chaque voxel de la structure, on essaye de représenter cette structure par des macro-voxels, au cours d'itérations préalables. Avant d'effectuer les itérations finales, on transforme ces macro-voxels, par une opération d'agrandissement (zoom), en des voxels distribués selon la finesse finale. Bien entendu pour le calcul des grandeurs physiques à l'endroit des macro-voxels on utilise des mesures selon une résolution moins grande.

L'invention a donc pour objet un procédé de reconstruction multi-échelle de l'image de la structure d'un corps dans lequel

- on effectue, avec une première résolution donnée, des séries de mesures d'au moins une propriété physique attachée à des éléments de volume, ou voxels, du corps avec, pour chaque série, une configuration particulière d'une caractéristique d'un protocole donné et en changeant, d'une série à une autre, la configuration de cette caractéristique de ce protocole,
- on acquiert ainsi des séries de résultats de mesure, chaque série étant représentative du corps et de la configuration correspondante de cette caractéristique,
- et on reconstruit itérativement une image de la structure du corps par mise en oeuvre d'un algorithme de reconstruction de type itératif avec lequel, d'une itération à une autre, on déduit plus exactement une nouvelle image de la structure du corps en effectuant le traitement de reconstruction à partir, d'une part, des séries de mesures, et d'autre part, d'une précédente image de cette structure,
- cette image comportant une collection d'éléments d'image, chaque élément d'images comportant une première information représentative du lieu d'un voxel dans le corps et une deuxième information représentative de la valeur de ladite propriété physique dans ce voxel, ces éléments d'image étant distribués avec une finesse donnée dépendant de cette résolution donnée,

caractérisé en ce que

- on utilise pour au moins une itération donnée des informations de mesure correspondant à une résolution moins grande que ladite résolution donnée, et une image de la structure selon une finesse moins grande que la finesse donnée, et en ce que
- pour une itération suivante, on transforme au préalable l'image de la structure selon cette finesse moins grande en une image de la structure selon une finesse plus grande que cette finesse moins grande, et on utilise en correspondance des informations de mesure correspondant à une résolution plus grande que cette résolution moins grande.

D'une manière préférée, pour passer des résultats de mesure d'une résolution finale (acquise dès le début) à une résolution moins grande, on procède à une moyenne. Cette moyenne peut même être pondérée par une fonction de lissage, par exemple une gaussienne. Par ailleurs, au moment où on transforme l'image de la structure selon la finesse moins grande en une image de la structure selon une finesse plus grande, de préférence on se livre à une interpolation trilinéaire. On montrera que cette technique de moyenne d'une part, et d'interpolation trilinéaire d'autre part, conduit d'une part à enlever des bruits de reconstruction que l'on aurait naturellement obtenus avec les autres procédés de reconstruction. Elle conduit d'autre part, et paradoxalement, à une représentation plus précise que celle qu'on obtiendrait avec un calcul de reconstruction traditionnel dans lesquels les itérations auraient été faites à chaque fois sur la finesse et la résolution la plus grande. On attribue ce résultat supérieur aux opérations de moyennage et d'interpolation qui ont pour effet de lisser les images et d'éliminer naturellement les bruits.

En conséquence, en plus d'aller plus vite, la méthode de l'invention permet sur certains types d'objets (plus lisse) de donner un meilleur résultat.

L'invention sera mieux comprise à la lecture de la description qui suit et à l'examen des figures qui l'accompagnent celles-ci ne sont données qu'à titre indicatif et nullement limitatif de l'invention. Les figures montrent :

- figure 1a et figure 1b : une représentation schématique d'un exemple d'un mode d'acquisition et d'un mode de reconstruction d'images pour lequel on utilise le procédé de reconstruction de l'invention;
- figure 2 : la représentation schématique d'opérations de moyennage, dites aussi de sous-échantillonnage, conduisant à des résolutions moins grandes des séries de mesures acquises;
- figures 3a à 3c : une représentation schématique d'un mode préféré d'agrandissement de la finesse dans lesquels les valeurs des voxels contenus dans les macro-voxels sont déterminées par interpolation trilinéaires.

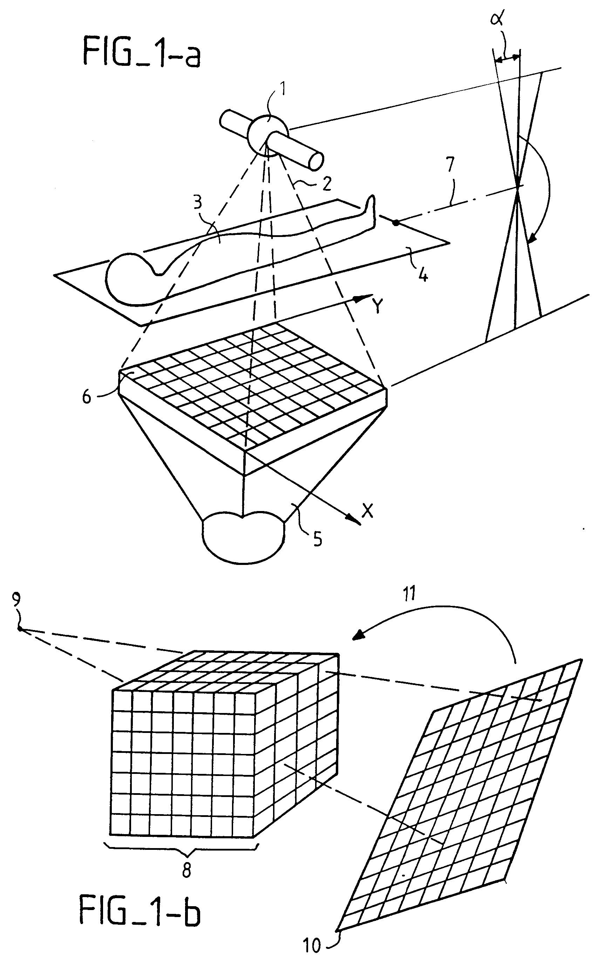

Les figures 1a et 1b montrent dans un exemple de densitométrie les conditions d'acquisition de séries de résultats de mesure, et la reconstruction des images qui doit correspondre à cette acquisition en volume. L'exemple indiqué ici correspond à une application de densitométrie où l'invention est particulièrement utile. Cependant la méthode de l'invention est aussi applicable à d'autres techniques : celles indiquées au début de cette description. La figure 1a montre un mode d'acquisition. La figure 1b montre un mode de reconstruction. Au moment d'une acquisition de densitométrie, un tube 1 à rayons X émet un rayonnement X 2 en direction d'un corps 3 d'un patient disposé sur un panneau porte-patient 4. De l'autre côté du corps 3 par rapport au tube 1 à rayons X est disposé un détecteur 5. Le détecteur 5 est de type deux dimensions. Il possède une pluralité de cellules détectrices telle que 6 organisées sur une surface, par exemple matriciellement, selon deux directions X et Y. Le tube 1 à rayon X et le détecteur 5, maintenus par ailleurs solidaires l'un de l'autre, peuvent tourner autour d'un axe 7 passant sensiblement par le milieu du patient 3. Les positions en rotation de cet ensemble sont repérées par un angle α. A chaque position de l'ensemble tube 1 - détecteur 5, on peut acquérir dans chaque cellule 6 des résultats de mesures radiologiques. A chaque position on acquiert donc une série de résultats de mesure.

Le protocole indiqué ici est donc un protocole de densitométrie, et la caractéristique qui conditionne les séries de résultats est la valeur de l'angle α qui indique l'orientation de l'ensemble tube 1 - détecteur 5 par rapport au corps 3. Dès qu'une acquisition a été faite on fait tourner cet ensemble d'un angle élémentaire, et on recommence l'acquisition en obtenant ainsi une deuxième série de résultats de mesure. Ainsi de suite on soumet le corps 3 à des irradiations orientées selon un ensemble de directions réparties sur au moins un demi-cercle. On sait, notamment à partir de la demande de brevet français citée plus haut, qu'une telle série d'acquisitions permet de reconstruire une image représentative de ce qui se passe dans le corps 3 à l'endroit où les rayons X 2 l'ont traversé.

La figure 1b représente l'algorithme de reconstruction par itération qui est mis en oeuvre dans l'invention. Dans un tel algorithme on forme l'hypothèse d'une connaissance a priori de l'image de la structure du corps 3. Cette image 8 comporte un ensemble de voxels chargés chacun de la valeur d'une grandeur physique. Dans cet algorithme, l'image 8 est soumise, par simulation, à une irradiation provenant d'un point focal 9 situé à une distance comparable à la distance qui sépare la position du foyer du tube 1 à rayon X par rapport au corps 3. Soumise à cette irradiation théorique l'image 8 à trois dimensions de la structure se projette en une image 10 à deux dimensions sur un plan de détection occupant une position en correspondance avec celle du détecteur 5 par rapport au corps 3. Le détecteur simulé 10 comporte des éléments de détection comparables aux cellules 6 du détecteur 5. On compare, série par série, et, dans chaque série, cellule à élément, les valeurs des grandeurs physiques impliquées d'une part par les mesures réellement acquises et d'autre part les reprojections simulées. On en déduit une nouvelle image simulée 11 à trois dimensions. Celle-ci est alors substituée à l'ancienne image 8 la structure du corps 3. Autrement dit l'image 11 de la structure du corps 3 est élaborée à partir de la connaissance de l'ancienne image 8 de la structure de ce corps 3, et de la valeur de l'écart entre la projection théorique 10 de cette structure 8 et les résultats de détection dans les cellules 6. Ceci est le principe des algorithmes de reconstruction algébriques tels que celui de la demande de brevet citée ci-dessous.

On conçoit facilement que la finesse avec laquelle on est susceptible de décrire l'image 8 de la structure du corps 3 est totalement dépendante de la résolution des éléments de détection de la surface 10, et aussi de la résolution des cellules sur le détecteur 5. Dans un exemple ou le détecteur 5 est un détecteur comportant 256 x 256 cellules on peut montrer qu'on peut reconstruire, avec une finesse significative, la structure 3 selon un volume avec 256 x 256 x 256 voxels, si on a par ailleurs effectué 256 acquisitions. Normalement, au moment des itérations, les comparaisons et les calculs de reconstruction doivent être faits pour chacun de ces $256^3$ voxels.

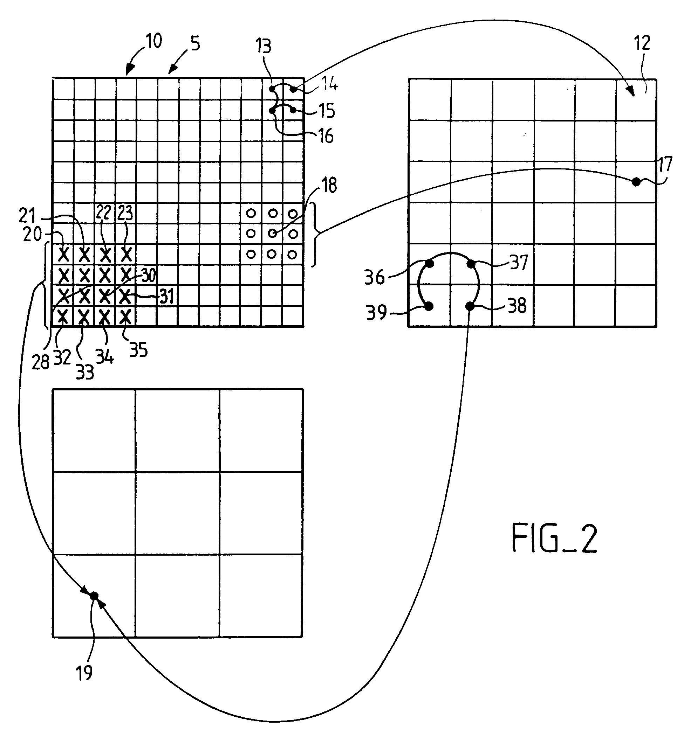

Dans l'invention, plutôt que d'effectuer un calcul sur un aussi grand nombre de voxels on procède à une simplification. Le principe de cette simplification est représenté sur la figure 2. Sur la figure 2 on a schématiquement représenté, en haut à gauche, la répartition des cellules 6 de détection du détecteur 5. Ces cellules correspondent aux éléments d'images de détection du détecteur simulé 10. Ces cellules et ces éléments sont distribués avec une résolution, dans un exemple, 256 x 256.

Dans l'invention on décide de reconstruire une image de la structure 3 dont la finesse, au lieu d'être de $256^3$, ne sera que de $128^3$. Dans ce cas on utilise en correspondance une résolution moins grande des mesures. Dans cet exemple la résolution moins grande est même de moitié. Dans ce but on définit alors des macro-cellules de détection, comme la macro-cellule 12 (en haut à droite). A cette macro-cellule 12 du détecteur 5 moins bien résolu, on attribue, pour chacune des 256 orientations de l'ensemble tube 1 - détecteur 5 par rapport au corps 3, un macro-résultat de mesure. Ce macro-résultat est une combinaison des résultats de mesure dans les cellules 13 à 16 contenues dans la macro-cellule 12. Le fait de faire cette moyenne conduit ainsi à un lissage dont on a déjà indiqué les effets bénéfiques ci-avant. Il est néanmoins possible de définir un voisinage plus grand pour la détermination du macro-résultat attribué à une macro-cellule. On peut prendre par exemple les résultats de mesure dans un ensemble de 9 cellules du détecteur 5, comme c'est le cas pour la macro-cellule 17. Dans le cas où le nombre de cellules du voisinage sur le détecteur 5 est impair, le centre de la macro-cellule sera en correspondance exacte avec celui de la cellule centrale 18 autour duquel le voisinage a été établi. Ceci peut conduire par ailleurs a des simplifications de calcul. Il est par ailleurs possible de choisir un voisinage de détermination du macro-résultat (sur seize cellules par exemple) différent de l'ensemble (13 à 16) des cellules définissant une macro-cellule.

Les macro-cellules 12 et 17, quel que soit leur mode de combinaison, sont de toutes façons, à un niveau de calcul donné toutes calculées de la même façon.

On a indiqué précédemment qu'il pouvait être utile d'effectuer au moins deux itérations. Compte tenu de ce qu'on cherche une connaissance finale de l'image avec une finesse de $256^3$, on peut choisir de réaliser une situation avec une résolution encore moins grande, avec 64 macro-macro-éléments ou encore 64 macro-macro-cellules au lieu de 128 macro-éléments ou macro-cellules. Au niveau 64, un macro-macro-élément possède comme information la moyenne des résultats de mesures des grandeurs physiques dans un voisinage encore plus grand. Par exemple dans le macro-macro-élément 19 (en bas à gauche) du niveau de résolution 64 on a une combinaison des résultats dans 16 cellules 20 à 35.

Dans un exemple simple la combinaison des 16 résultats des cellules 20 à 35 est une moyenne. Dans ce cas on peut même dire que la valeur attribuée au macro-macro-élément 19 de niveau 64 est la moyenne de quatre macro-éléments du niveau 128 : les éléments 36 à 39. Dans ce cas l'opération de sous échantillonnage à laquelle il faut soumettre les mesures, pour diminuer deux fois la finesse et la résolution, peuvent comporter les moyennes sur quatre éléments-cellules du détecteur 5, puis les moyennes sur quatre macro-éléments-cellules voisins.

Cependant, on peut effectuer, pour le calcul de la valeur à attribuer aux macro-macro-éléments 19 du niveau 64, une pondération, par une fonction de lissage, par exemple gaussienne, des résultats de mesure des grandeurs physiques dans les cellules 20 à 35. Cette pondération peut alors être du genre :

$$(1/\sqrt{2\pi\sigma^2}).\exp(-r^2/2\sigma^2)$$

Dans cette expression r représente la distance entre le centre du macro-macro-élément 19 et chacune des cellules 20 à 35 son voisinage. La valeur $\sigma$ est une valeur d'écart type fixée comme paramètre. Une bonne valeur de $\sigma$ est telle que la largeur à mi-hauteur de la gaussienne est égale à la taille de la cellule.

A ce stade de l'explication on peut admettre qu'on connaît trois groupes de séries de mesure. Dans un premier groupe, on a toutes les séries de mesures finales (celles qui sont effectivement mesurées au début). Le nombre de ces séries est égal au nombre d'angles $\alpha$ exploration de corps 3. Dans un deuxième groupe, on a composé les mesures de manière à ce qu'elles se répartissent selon les macro-éléments au niveau 128. On peut avoir là aussi un même nombre de séries. Dans le troisième groupe on a, en correspondance avec les deux premiers groupes, des mêmes séries de mesure mais pour des macro-macro-éléments du niveau 64. D'un groupe à l'autre la résolution est de moins en moins grande (de plus en plus grossière).

Dans l'invention on commence la reconstruction en effectuant une itération avec les $64^2$ x 256 macro-macro-éléments 19 du niveau 64. Dans ce cas on obtient une image avec une finesse moins grande comportant $64^3$ macro-macro-voxels. On utilise ainsi toutes les 256 images en projection acquises. Il est néanmoins possible d'en prendre un plus petit nombre. Par exemple, on peut en prendre une sur deux (au niveau 128) ou même une sur quatre (au niveau 64).

On aurait pu calculer l'image au niveau 64 sans se livrer aux opérations de combinaison et de moyennage indiquées ci-dessus. Cependant si on agit ainsi, on va perdre les petits détails, et on risque de voir apparaître dans l'image finale un tramé d'image qui apparaît comme un bruit.

Une fois qu'une itération, ou même plusieurs itérations, ont été entreprises au niveau 64 on peut décider d'effectuer une itération suivante au niveau 128. Dans ce cas il est nécessaire de transformer l'image de la structure 3 avec une finesse en $64^3$ macro-macro-voxels en une image avec une finesse en $128^3$ macro-voxels. Une solution simple consisterait à attribuer à chaque macro-voxel dans une finesse supérieure les valeurs retenues, pour les macro-macro-voxels du niveau inférieur. Cependant, comme pour les opérations de moyennage cette pratique conduit à des artefact dans la représentation. Aussi, de préférence on se livre sur les macro-macro-voxels à une interpolation, par exemple trilinéaire, au voisinage de chacun des macro-voxels pour en déterminer la valeur.

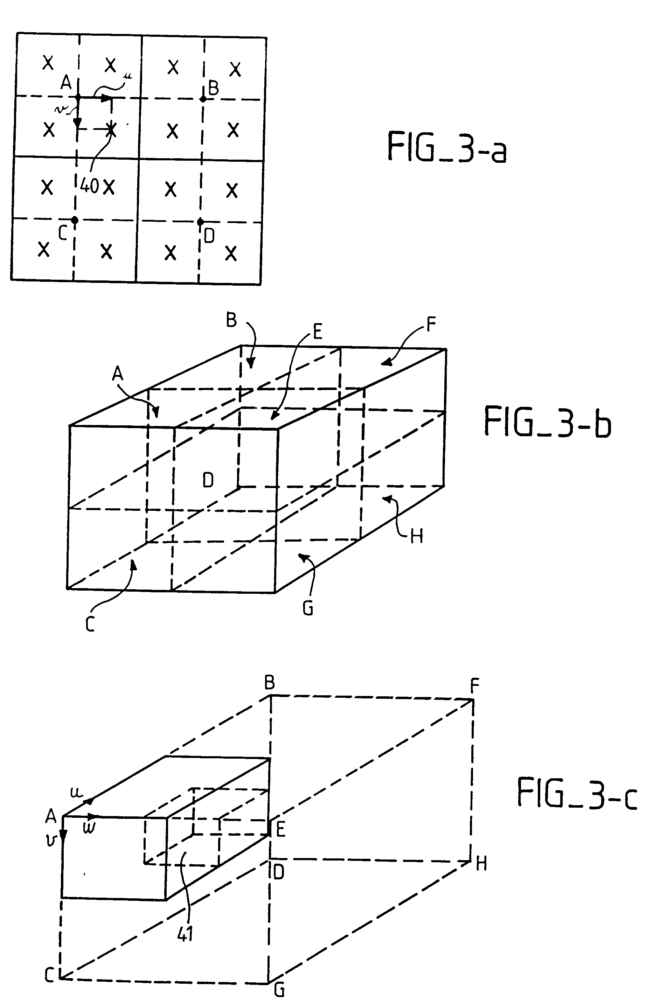

Les figures 3a à 3c permettent de comprendre le calcul de l'interpolation trilinéaire. La figure 3a montre, pour simplifier, le principe du calcul d'une interpolation bilinéaire. Dans celui-ci, à partir de la connaissance de valeurs en des éléments d'images A, B, C, D, correspondant à une représentation grossière on cherche à connaître des valeurs à attribuer à des sous-éléments d'image, marqués par des croix, et plus finement distribués. Pour chacun de ces sous-éléments d'images, par exemple le sous-élément 40, on mesure ses coordonnées u, v, dans un repère centré sur l'un des éléments d'image, par exemple l'élément A. On calcule alors le terme :

$$a.(1 - u).(1 - v)$$

Dans cette expression a est la valeur de l'élément d'image A. On calcule une même expression concernant le sous-élément 40, mais rapportée à chacun des autres éléments B, C et D. On additionne ces quatre termes pour obtenir la valeur d'image du sous-élément 40. On remarque que ces calculs se simplifient puisque u et v ne peuvent prendre que des valeurs égales à 1/4 et 3/4 de la distance AC séparant deux éléments d'image entre eux.

La figure 3b montre la connaissance que l'on a de l'image de la structure du corps 3 après une itération à un niveau inférieur, par exemple au niveau 64. Elle montre les centres A à H de huit macro-macro-éléments d'image ou voxel de cette image. La figure 3c montre la connaissance que l'on voudrait avoir, en des macro-voxels intermédiaires tels que 41, de l'image de la structure du corps 3 à un niveau de finesse supérieure, par exemple 128 à celui du niveau précédent. L'interpolation trilinéaire dont il est question utilise les coordonnées u, v, w des centres de chacun des macro-éléments d'images 41 par rapport à des systèmes d'axes centrés sur chacun des macro-macro-éléments d'image au niveau de la finesse inférieure, par exemple de A. La valeur à attribuer au macro-élément d'image 41 est égale alors à la somme des termes tels que :

$$a.(1 - u).(1 - v).(1 - w)$$

dans laquelle a représente la valeur déterminée au cours des itérations précédentes pour le macro-macro-voxel A.

On remarque que dans l'invention on a remplacé des multiples calculs d'itération, avec une grande finesse et avec une grande résolution, par le calcul d'itérations à l'issue desquelles la finesse et la résolution augmentent, et aussi par des calculs de moyennes d'une part et des calculs d'interpolations trilinéaires d'autre part. On va maintenant montrer que le temps de calcul de ces moyennes et de ces interpolations est négligeable.

On sait par exemple que, pour un voxel avec les algorithmes de type algébrique, et à chaque itération, il y a environ 40 opérations à effectuer par projection. Le nombre total des opérations est donc, pour une itération donnée, directement proportionnel au nombre de voxels $64^3$, $128^3$, ou $256^3$. Dans un exemple, pour fixer les idées, on remplace une itération à 128 suivie d'une itération à 128, par une itération à 64 suivie d'un agrandissement de 64 à 128 et d'une itération à 128. Si on appelle $n_p$ le nombre de projections dans la série, et $n_v$ le nombre de voxels, on peut dire qu'une itération à un niveau donné (par exemple 64) conduit à un nombre d'opérations égal à $2 \times 40 \times n_p \times n_v$. Par contre, l'itération à un niveau supérieur (par exemple en 128) conduit à un nombre d'opérations égal à $2 \times 40 \times n_p \times n_v \times 8$. En effet étant donné qu'il y a huit fois plus de voxels en 128 qu'il n'y en a en 64, il y a huit fois plus de calculs.

En simplifiant on peut admettre qu'il y a en moyenne moins de 6 opérations d'addition ou de multiplication pour déterminer par interpolation trilinéaire, la valeur en un macro-élément d'images 41 quand on connaît la valeur en 8 macro-macro-éléments d'image voisins A à H. Le nombre total d'opérations nécessaires pour faire l'agrandissement est alors égal à $6 \times n_v \times 8$. En effet, ce nombre est proportionnel à huit fois le nombre de macro-macro-voxels. Un rapide calcul montre qu'une itération à 64 suivie d'un agrandissement donne un nombre d'opération tout à fait négligeable par rapport au nombre d'opérations avec deux itérations en 128.

Autrement dit dans l'invention on fait, pendant une durée de calcul sensiblement égale à une itération à 128, une itération à 64 et une itération à 128. On montre bien ainsi qu'un rapport sensiblement 2 est gagné sur le temps. En pratique il y a une première itération en 64 pour déterminer une image en finesse $64^3$. Par interpolation on déduit une image en finesse $128^3$. On effectuera sur cette image $128^3$ une itération à 128. Après l'itération en 128, on déduit une image en finesse $256^3$ par agrandissement. Sur cette image en $256^3$ on effectue la dernière itération. Le temps de calcul est alors celui de la dernière itération seule. Le temps total est ainsi fortement réduit pour une même qualité d'image.

Si on ne procédait pas par interpolation trilinéaire on pourrait aussi affecter à chaque macro-voxel 41, appartenant au voisinage d'un macro-macro-voxel A, la valeur a retenue pour A. Dans ce cas cependant on observe un phénomène de pavage entre les macro-voxels du voisinage de A et ceux du voisinage de B. Ce phénomène apparaît comme un artefact dans l'image d'une manière similaire au sous échantillonnage sans la moyenne. Une autre solution que l'interpolation trilinéaire (par exemple pondérée par une gaussienne) est là aussi envisageable.

Les méthodes de reconstruction algébriques présentent par ailleurs un autre avantage. Elles permettent de déterminer un support de l'objet à reconstruire. Cette détermination a essentiellement pour objet de limiter le calcul de l'image de la structure de l'objet en des éléments d'images qui correspondent seulement à des endroits où se trouvent des parties intéressantes de cet objet. Par exemple, dans le corps humain, et en angiographie, on ne reconstruit que l'arbre vasculaire, pas les tissus qui l'entourent. Dans ce but on commence par définir un support de l'objet. En effet, ces structures sont des structures "creuses" et il est inutile de calculer les valeurs des structures environnantes, pour les éliminer ensuite au cours d'une opération de visualisation de la structure reconstruite. On sait, notamment par la demande du brevet français n°88 17001 déposé le 22 décembre 1988 par le même demandeur, définir rapidement une région support d'un objet.

La question se pose alors dans l'invention de savoir comment va être défini le support, compte tenu du fait que dans les premières itérations on utilise une finesse moins grande de l'image 8 de la structure 3. On s'est alors rendu compte qu'il était nécessaire, pour définir le support pour une petite finesse, d'utiliser la connaissance du support pour une grande finesse. En conséquence on doit considérer comme appartenant au support, à une finesse moins grande (128³), tous les macro-voxels qui contiendraient ne serait-ce qu'un voxel de l'image définie sur la grande finesse (256³). En effet, si on calculait spécifiquement un support au niveau de chaque finesse (64 ou 128 ) on risquerait d'éliminer, pour les premières itérations, des contributions d'éléments d'image que l'on ne pourrait jamais incorporer correctement dans le calcul par la suite.

Par ailleurs, on s'est rendu compte qu'il était très intéressant d'effectuer des traitements d'image sur les images intermédiaires (selon une finesse moins grande). En effet, lorsqu'on veut utiliser une image on cherche, en particulier pour la visualiser, à en enlever le bruit. Les différentes techniques de traitement qui permettent cette amélioration consistent à filtrer les éléments d'image ou encore à segmenter l'image. Avec le filtrage on attribue comme valeur de grandeur physique à un élément de volume une valeur dépendant de sa propre valeur et aussi des valeurs propres attribuées aux voisins de cet élément de volume. Avec la segmentation on élimine de la structure les éléments de volume dont la valeur de la grandeur physique est trop faible (s'apparente à du bruit) ou, autrement, appartient à une plage de valeur inintéressante (élimination des tissus mous dans certaines représentations osseuses par exemple).

On distingue, parmi les filtrages, d'une part les filtrages linéaires, d'autre part, les filtrages non linéaires. Par exemple, par un filtrage linéaire par lissage ou moyennage on peut favoriser la reconstruction des structures lisses comportant des parties avec une densité qui varie lentement ou même qui est constante. Dans un autre exemple, avec un filtrage non linéaire, on va au contraire favoriser la reconstruction des objets dans la structure dont les valeurs de grandeur physique n'appartiennent pas à des plages de valeur interpénétrées. Ces plages de valeur sont sans continuum entre elles.

Quand on segmente, on élimine de la région support de la structure tous les éléments de volume de cette structure dont la valeur de la grandeur physique mesurée sort d'une plage prédéterminée.

Tous ces traitements, lorsqu'ils sont effectués sur les images intermédiaires en finesse moins grande, conduisent à des gains de temps sur le traitement lui-même et sur la reconstruction. Le gain de temps sur le traitement est lié au fait qu'on traite moins d'éléments de volume avec une finesse moins grande qu'avec une finesse plus grande. Le gain de temps en reconstruction est lié au fait qu'après segmentation intermédiaire il y a moins d'éléments de volume à reconstruire (donc moins de calculs) que si la segmentation est faite sur l'objet reconstruit global. On pourrait montrer avec l'invention que le coût de temps de ces traitements intermédiaires est largement compensé par les gains de temps sur les traitements finaux.

## Revendications

1. Procédé de reconstruction multi-échelle de l'image de la structure d'un corps dans lequel
   - on effectue, avec une première résolution donnée, des séries de mesures d'au moins une propriété physique attachée à des éléments de volumes, ou voxels, du corps avec, pour chaque série, une configuration d'acquisition particulière d'une caractéristique d'expérimentation d'un protocole donné et en changeant, d'une série à une autre, la configuration de cette caractéristique de ce protocole,
   - on acquiert ainsi des séries de résultats de mesure, chaque série étant représentative du corps et de la configuration correspondante de cette caractéristique,

- et on reconstruit itérativement une image de la structure du corps par mise en oeuvre d'un algorithme de reconstruction avec lequel, d'une itération à une autre, on déduit plus exactement une nouvelle image de la structure du corps en effectuant le traitement de reconstruction à partir d'une part des séries de mesures et d'autre part d'une précédente image de cette structure,

- cette image comportant une collection d'éléments d'image, chaque élément d'image comportant une première information représentative du lieu d'un voxel dans le corps et une deuxième information représentative de la valeur de ladite propriété physique en ce voxel, ces éléments d'images étant distribués avec une finesse donnée dépendant de cette résolution donnée, caractérisé en ce que

- on utilise pour au moins une itération donnée des informations de mesure correspondant à une résolution moins grande que ladite résolution donnée, et une image de la structure selon une finesse moins grande que la finesse donnée, et en ce que,

- pour une itération suivante, on transforme au préalable l'image de la structure selon cette finesse moins grande en une image de la structure selon une finesse plus grande que cette finesse moins grande, et on utilise en correspondance des informations de mesure correspondant à une résolution plus grande que cette résolution moins grande.

2. Procédé selon la revendication 1, caractérisé en ce que

- le protocole est un protocole de type densitométrie à rayons X,

- la caractéristique concerne l'orientation d'un densitomètre servant à mettre en oeuvre ce protocole densitomètrique;

- la configuration concerne la valeur d'un angle d'orientation de ce densitomètre par rapport à une référence liée au corps,

- les séries de mesures comportent des séries d'acquisitions radiologiques au cours desquelles la structure est projetée en une projection à deux dimensions sur un détecteur à deux dimensions comportant des cellules détectrices réparties selon ladite première résolution,

- l'image de la structure du corps est une image à trois dimensions,

- et en ce que la méthode de reconstruction est du type algébrique.

3. Procédé selon la revendication 2, caractérisé en ce que, pour la résolution moins grande des informations de mesure, on choisit de considérer comme résultat de mesure, à chaque projection, une combinaison de résultats de mesure en des cellules adjacentes entre elles, cette combinaison étant affectée à une macro-cellule consistant en l'ensemble de ces cellules adjacentes.

4. Procédé selon la revendication 3, caractérisé en ce que la combinaison est une moyenne arithmétique.

5. Procédé selon la revendication 4, caractérisé en ce que la combinaison est une moyenne pondéré par une fonction de lissage.

6. Procédé selon l'une quelconque des revendications 1 à 5, caractérisé en ce que pour transformer l'image de la structure selon une finesse moins grande en une image selon une finesse plus grande on effectue pour des macro-éléments (41), ensembles d'éléments de volume correspondant à ladite finesse plus grande, une interpolation trilinéaire de valeurs (a,b, ...) de ladite propriété physique entre des macro-macro-éléments ensembles d'éléments de volume correspondant à ladite finesse moins grande voisins (A,B,...H) et distribués selon la finesse moins grande.

7. Procédé selon l'une quelconque des revendications 1 à 6, caractérisé en ce que on limite la reconstruction itérative à une région support détectée en fonction de la finesse plus grande.

8. Procédé selon l'une quelconque des revendications 1 à 7, caractérisé en ce que le rapport des finesses et des résolutions plus grande et moins grande sont des multiples de 2.

9. Procédé selon l'une quelconque des revendications 1 à 8, caractérisé en ce que, avant une itération suivant une itération donnée, on traite l'image de la structure selon la finesse moins grande de façon à améliorer la qualité de la reconstruction.

10. Procédé selon la revendication 9, caractérisé en ce que pour le traitement, on filtre c'est-à-dire on attribue comme valeur de grandeur physique à un élément de volume une valeur dépendant de sa propre valeur et des valeurs attribuées aux voisins de cet élément de volume par lissage linéaire les éléments de volume de la structure selon la finesse moins grande de façon à améliorer la reconstruction d'un objet physiquement lisse.

**11.** Procédé selon la revendication 9, caractérisé en ce que pour le traitement, on filtre c'est-à-dire on attribue comme valeur de grandeur physique à un élément de volume une valeur dépendant de sa propre valeur et des valeurs attribuées aux voisins de cet élément de volume par lissage non linéaire les éléments de volume de la structure selon la finesse moins grande de façon à préserver les contours et à améliorer la reconstruction d'objets dans la structure dont les valeurs des propriétés physiques appartiennent à des plages différenciées et sans partie commune.

**12.** Procédé selon la revendication 9, caractérisé en ce que pour le traitement, on élimine d'une région support de la structure selon la finesse moins grande tous les éléments de volumes dont la valeur de la grandeur physique est inférieure à un seuil de bruit prédéterminé.

**Patentansprüche**

**1.** Verfahren zur Mehrfachmaßstab-Rekonstruktion eines Körperstrukturbildes, bei dem

- mit einer ersten vorgegebenen Auflösung Meßreihen durchgeführt werden wenigstens einer körperlichen Eigenschaft, welche Volumenelementen oder Voxel des Körpers zugeordnet sind, mit einer besonderen Erfassungskonfiguration einer Untersuchungseigenschaft eines vorgegebenen Protokolls für jede Reihe und mit einer Veränderung von einer Reihe zur nächsten der Konfiguration dieser Eigenschaft des Protokolls,
- Meßresultatreihen erhalten werden, wobei jede Reihe dem Körper und der dieser Eigenschaft entsprechenden Konfiguration entspricht,
- damit wiederholt ein Körperstrukturbild rekonstruiert wird mittels eines Rekonstruktionsalgorithmus, wobei von einer Wiederholung zur nächsten ein neues Körperstrukturbild genauer abgezogen wird, in dem die Durchführung der Rekonstruktion erfolgt, ausgehend einerseits von Meßreihen und andererseits von einem vorhergehenden Bild dieser Struktur,
- dieses Bild eine Sammlung von Bildelementen aufweist, wobei jedes Bildelement eine erste Information enthält bezüglich der Stelle eines Voxels in dem Körper und eine zweite Information enthält bezüglich des Wertes der körperlichen Eigenschaft in diesem Voxel und wobei diese Bildelemente mit einer vorgegebenen Feinheit verteilt werden, welche von der vorgegebenen Auflösung abhängt,

dadurch gekennzeichnet, daß

- für wenigstens eine vorgegebene Annäherung Meßinformationen verwendet werden mit einer Auflösung, die geringer ist als die vorgegebene Auflösung sowie ein Strukturbild mit einer Feinheit, die geringer ist als die vorgegebene Feinheit und daß für eine nachfolgende Näherung vorher das Strukturbild entsprechend dieser geringeren Feinheit umgewandelt wird in ein Strukturbild mit höherer Feinheit als diese geringere Feinheit und daß dementsprechend Meßinformationen verwendet werden, die einer höheren Auflösung als der geringeren Auflösung entsprechen.

**2.** Verfahren nach Anspruch 1, dadurch gekennzeichnet, daß

- das Protokoll ein densitometrisches Protokoll für Röntgenstrahlen ist,
- die Konfiguration den Wert eines Orientierungswinkels dieses Densitometers bezüglich einer mit dem Körper verbundenen Referenz betrifft,
- die Meßreihen radiologische Erfassungsreihen aufweisen, während deren die Struktur in einer zweidimensionalen Projektion auf einen zweidimensionalen Detektor projiziert wird, welcher Detektorzellen aufweist, die gemäß der ersten Auflösung verteilt sind,
- das Körperstrukturbild ein dreidimensionales Bild ist und
- daß das Rekonstruktionsverfahren ein algebraisches Verfahren ist.

**3.** Verfahren nach Anspruch 2, dadurch gekennzeichnet, daß für eine höhere Auflösung der Meßinformationen als Meßresultat bei jeder Projektion eine Kombination von Meßresultaten zu ihnen benachbarter Zellen betrachtet werden, wobei diese Kombination einer Makrozelle zugeordnet ist, die aus der Gesamtheit der benachbarten Zellen besteht.

**4.** Verfahren nach Anspruch 3, dadurch gekennzeichnet, daß die Kombination ein arithmetisches Mittel ist.

**5.** Verfahren nach Anspruch 4, dadurch gekennzeichnet, daß die Kombination ein durch eine Glättungsfunktion beeinflußter Mittelwert ist.

**6.** Verfahren nach einem der Ansprüche 1 bis 5, dadurch gekennzeichnet, daß zur Umwandlung des Strukturbildes mit einer geringeren Feinheit in ein Bild mit einer höheren Feinheit für diese Makroelemente (41) als Gesamtheit der Volumenelemente entsprechend dieser höheren Feinheit eine trilineare Interpolation der Werte (a, b, ...) durchgeführt wird der körperlichen Eigenschaft zwischen benachbarten Makro-Makro-Elementen (A, B, ... H) entsprechend der Gesamtheit der Volumenelemente mit der geringeren Feinheit, die gemäß dieser geringeren Feinheit verteilt werden.

7. Verfahren nach einem der Ansprüche 1 bis 6, dadurch gekennzeichnet, daß die Näherungsrekonstruktion begrenzt wird auf einen Tragbereich, der als Funktion der höheren Feinheit ermittelt wird.

8. Verfahren nach einem der Ansprüche 1 bis 7, dadurch gekennzeichnet, daß das Verhältnis der höheren und geringeren Feinheiten und Auflösungen mit 2 multipliziert wird.

9. Verfahren nach einem der Ansprüche 1 bis 8, dadurch gekennzeichnet, daß vor einer Näherung entsprechend einer vorgegebenen Näherung das Strukturbild gemäß der geringeren Feinheit dergestalt bearbeitet wird, daß die Qualität der Rekonstruktion verbessert wird.

10. Verfahren nach Anspruch 9, dadurch gekennzeichnet, daß für die Bearbeitung mittels einer linearen Glättung die Volumenelemente der Struktur gefiltert werden, d. h. daß als Wert der körperlichen Größe einem Volumenelement ein Wert hinzugefügt wird, der von seinem Eigenwert abhängt, sowie Werte, welche der Nachbarschaft des Volumenelementes zugeordnet sind, gemäß der geringeren Feinheit dergestalt, daß die Rekonstruktion eines glatten körperlichen Objektes verbessert wird.

11. Verfahren nach Anspruch 9, dadurch gekennzeichnet, daß zur Bearbeitung mittels einer nicht linearen Glättung die Volumenelemente der Struktur gefiltert werden, d. h. daß als Wert der körperlichen Größe einem Volumenelement ein Wert hinzugefügt wird, der von seinem Eigenwert abhängt sowie Werte, welche der Nachbarschaft des Volumenelements zugeordnet sind, gemäß der geringeren Feinheit dergestalt, daß die Umrisse beibehalten werden und die Rekonstruktion von Objekten in der Struktur verbessert werden, deren Werte der körperlichen Eigenschaften getrennten Bereichen angehören ohne gemeinsames Teil.

12. Verfahren nach Anspruch 9, dadurch gekennzeichnet, daß zur Bearbeitung aus einem Tragbereich der Struktur mit der geringeren Feinheit alle Volumenelemente entfernt werden, deren Wert der körperlichen Größe kleiner ist als ein vorgegebener Stör-Schwellwert.

## Claims

1. Multi-scale reconstruction method for the image of a body structure, wherein:
   - with a first given resolution, series of measurements are carried out of at least one physical property attached to volume elements, or voxels, of the body, with for each series a particular acquisition configuration of an experimentation characteristic of a given protocol, the configuration of this characteristic of this protocol being changed from one series to another,
   - series of measuring results are thus acquired, each series being representative of the body and of the corresponding configuration of this characteristic,
   - and an image of the body structure is reconstructed iteratively by the use of a reconstruction algorithm with which, from one iteration to the next, a fresh image of the body structure is deduced more accurately, the reconstruction treatment being effected on the one hand on the basis of the series of measurements and on the other hand on the basis of a preceding image of this structure,
   - this image, comprising a collection of image elements, each image element comprising a first item of information representative of the locality of a voxel in the body and a second item of information representative of the value of the said physical property in this voxel, these image elements being distributed with a given fineness depending on this given resolution,
   characterised by the fact that
   - use is made, for at least one given iteration, of items of measurement information corresponding to a lower resolution than the said given resolution, and an image of the structure according to a lower degree of fineness than the given fineness,
   and that
   - for a subsequent iteration the image of the structure is transformed in advance according to a higher degree of fineness than the said lower fineness and use is made correspondingly of the items of measurement information corresponding to a higher resolution than the said lower resolution.

2. Process according to Claim 1, characterised by the fact that

- the protocol is a protocol of the X-ray densitometry type,
- the characteristic concerns the orientation of a densitometer serving to put this densitometric protocol into operation,
- the characteristic concerns the value of an orientation angle of this densitometry in relation to a reference bound to the body,
- the series of measurements comprise series of radio-logical acquisitions in the course of which the structure is projected in a two-dimensional projection onto a two-dimensional detector comprising detector cells distributed according to the aforementioned first resolution,
- the image of the structure of the body is a three-dimensional image,
- and the reconstruction method is of the algebraic type.

3. Process according to Claim 2, characterised by the fact that for the lower resolution of the items of measurement information a combination of the measuring results in mutually adjacent cells is regarded as the measuring result at each projection, this combination being allocated to a macrocell formed by the said adjacent cells in their entirety.

4. Process according to Claim 3, characterised by the fact that the combination is an arithmetic mean.

5. Process according to Claim 4, characterised by the fact that the combination is a mean weighted by a smoothing function.

6. Process according to any one of Claims 1-5, characterised by the fact that to transform the image of the structure according to a lower degree of fineness into an image according to a higher degree of fineness, for macro-elements (41), assemblies of volume elements corresponding to the said greater fineness, a trilinear interpolation of values (a,b,...) of the said physical property is effected between adjacent macro-macro-elements (A,B,....H), assemblies of volume elements corresponding to the said lower degree of fineness and distributed according to the lower degree of fineness.

7. Process according to any one of Claims 1-6, characterised by the fact that the iterative reconstruction is limited to a support region detected as a function of the greater fineness.

8. Process according to any one of Claims 1-7, characterised by the fact that the ratio between greater and lower degrees of fineness and resolution are multiples of 2.

9. Process according to any one of Claims 1-8, characterised by the fact that before an iteration according to a given iteration the image of the structure according to the lower degrees of fineness is treated in such a way as to improve the quality of the reconstruction.

10. Process according to Claim 9, characterised by the fact that for the treatment the volume elements of the structure according to the lower degree of fineness are filtered, i.e. the physical magnitude value allocated to a volume element is a value depending on its own value and values allocated to the ones adjacent to this volume element, in such a way as to improve the reconstruction of a physically smooth object.

11. Process according to Claim 9, characterised by the fact that for the treatment the volume elements of the structure according to the lower degree of fineness are filtered, i.e. the physical magnitude value allocated to a volume element is a value depending on its own value and values allocated to the ones adjacent to this volume element, in such a way as to improve the reconstruction of objects in the structure of which the values of the physical properties belong to ranges differentiated and having no part in common.

12. Process according to Claim 9, characterised by the fact that for the treatment all the volume elements of which the value of the physical magnitude is less than a predetermined noise threshold are eliminated from a support region of the structure according to the lower degree of fineness.

FIG_1-a

FIG_1-b

FIG_2

FIG_3-a

FIG_3-b

FIG_3-c